# EUROPEAN PATENT SPECIFICATION

(11) **EP 4 464 987 B1**
(45) Date of publication and mention of the grant of the patent: **11.11.2026**
(21) Application number: 23382461.4
(22) Date of filing: 17.05.2023
(51) Int. Cl.: G01D 5/244, G01D 18/00

(54) **METHOD OF OPERATING AN ELECTRICAL DRIVE SYSTEM**
VERFAHREN ZUM BETREIBEN EINES ELEKTRISCHEN ANTRIEBSSYSTEMS
PROCÉDÉ DE FONCTIONNEMENT D'UN SYSTÈME D'ENTRAÎNEMENT ÉLECTRIQUE

(43) Date of publication of application: 20.11.2024
(73) Proprietor: Lenze SE, 31855 Aerzen (DE)
(72) Inventor: Calvo Barreiro, Carlos, 20014 Donostia (Gipuzkoa) (ES)
(74) Representative: Patentanwälte Ruff, Wilhelm, Beier, Dauster & Partner mbB

(56) References cited:
- EP-A2- 1 489 735
- DE-A1- 102020 116 165
- US-B2- 10 505 428

## Description

EP 1 489 735 A2, DE 10 2020 116 165 A1 and US 10,505,428 B2 respectively disclose methods of operating an electrical drive system comprising a first sensor being coupled to an input shaft of a gear and a second sensor being coupled to an output shaft of the gear, wherein the signals provided by the first sensor and the second sensor are used to enhance the accuracy of position detection.

It is the object of the invention to provide for a method of operating an electrical drive system having a high positional accuracy.

The method serves to operate an electrical drive system. The electrical drive system comprises: a, in particular mechanical, gear having an input shaft and having an output shaft, wherein the gear has a known gear ratio between the input shaft and the output shaft, a first sensor being coupled to the input shaft of the gear and generating a first sensor signal, the first sensor signal depending on a rotational angle of the input shaft, and a second sensor being coupled to the output shaft of the gear and generating a second sensor signal, the second sensor signal depending on a rotational angle of the output shaft.

The method comprises the steps according to claim 1. Claim 2 defines preferred features of the method.

The invention will now be described in detail with respect to the drawings. Within the drawings,
- Fig. 1: schematically depicts an electrical drive system comprising a first sensor generating a first sensor signal and comprising a second sensor generating a second sensor signal, and
- Fig. 2: depicts a positioning error of a test table before applying any correction, a position difference between a first sensor signal and a second sensor signal, and an estimated positioning error after an inventive error correction.

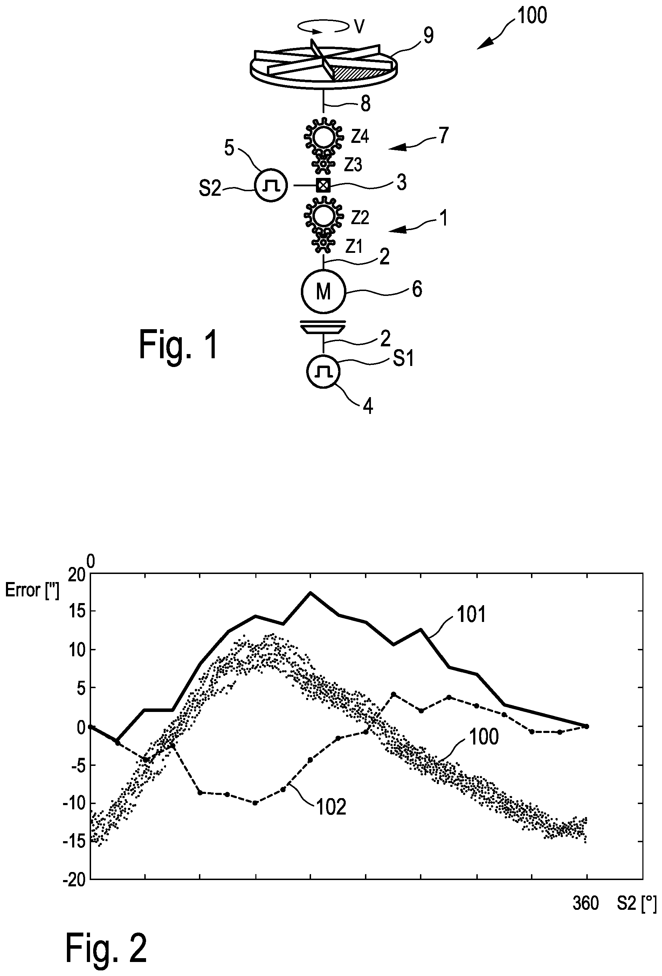

Fig. 1 depicts an electrical drive system 100. The electrical drive system 100 comprises a first mechanical gear 1 having an input shaft 2 and having an output shaft 3, wherein the first gear 1 has a known gear ratio i = Z1/Z2 between the input shaft 2 and the output shaft 3. The input shaft 2 is driven by an electric motor 6.

The electrical drive system 100 further comprises a first sensor or encoder 4 being coupled to the input shaft 2 of the first gear 1 and generating a first sensor signal S1. The first sensor signal S1 depends on a rotational angle of the input shaft 2.

The electrical drive system 100 further comprises a second sensor or encoder 5 being coupled to the output shaft 3 of the first gear 1 and generating a second sensor signal S2, the second sensor signal S2 depending on a rotational angle of the output shaft 3.

The electrical drive system 100 further comprises an optional second mechanical gear 7 having an input shaft being formed by the output shaft 3 of the first mechanical gear 1 and having an output shaft 8 driving a test table 9, wherein the second gear 7 has a known gear ratio Z3/Z4 between the input shaft and the output shaft 9.

The method of operating the electrical drive system 100 comprises the following steps:
1. Rotate the input shaft 2 and record the resulting position/angle *α_{P}*(*t*) of the first sensor signal S1 and of the position/angle *α_{S}*(*t*) of the second sensor signal S2.
2. Perform a mapping or translation of the position/angle *α_{P}*(*t*) of the first sensor signal S1 to the position/angle *α_{S}*(*t*) of the second sensor signal S2 by applying the gearbox ratio "i" of the first gear 1 between them: $α {′}_{P} \left(t\right) = \frac{{α}_{P} \left(t\right)}{i} mod 360 °$.
3. Calculate the position difference e(t) between the first sensor signal S1 and the second sensor signal S2 e(t) *= α'_{P}*(*t*) *- α_{S}*(*t*).
4. Evaluate the position difference versus the position/angle *α_{S}* of the second sensor signal S2 (e.g. 0 to 360°) as depicted in form of a cloud of datapoints 100 in figure 2 and apply a filtering technique to the position difference versus the position/angle *α_{S}* of the second sensor signal S2 to calculate an error component e(*α_{S}*).
5. Correct the position/angle *α_{S}* of the second sensor signal S2 based on/by the error component e(*α_{S}*).

Fig. 2 depicts a positioning error 101 of the test table 9 versus the position/angle *α_{S}* of the second sensor signal S2 before applying any correction. Fig. 2 depicts one full rotation of the second shaft 3.

Fig. 2 further depicts a position difference 100 between the first sensor signal S1 and the second sensor signal S2 versus the position/angle *α_{S}* of the second sensor signal S2. The position difference 100 is formed by a cloud of data points generated by sampling multiple rotations of the output shaft 3.

Fig. 2 further depicts an estimated positioning error 102 after an inventive error correction.

If several error sources exist at the frequency of the second sensor 5 in the angle domain, they would not be distinguishable for the inventive method and thus they could not be eliminated. If the ratio of the first gear 1 between the first sensor 4 and the second sensor 5 is equal to 1 or if an external torque is applied to the second sensor rotation frequency, the inventive method could not distinguish the errors generated by each error source and would not be able to mitigate the errors generated by these error sources. However, having multiple error sources at the same frequency prevents the inventive method only from extracting errors generated by the second sensor 5. Multiple calibration runs at different rotational speeds could be performed to prevent this issue if unknown error sources of relevant magnitude could be present in the system.

In order to prevent the excitation of vibration modes in the system, it is preferred to run the electrical drive system at constant speed and load during data recording.

A data recording length should cover all the range of the possible movement of the second sensor signal S2. To be able to efficiently filter all error sources having frequencies below the frequency of the second sensor signal S2, a recording for several periods of the slowest error source in the system may be performed, such that those lower frequency contributions are oversampled and thus may be easily filtered out, for instance, by a low pass filter.

To filter out unwanted error sources different approaches can be defined for filtering the calculated difference. Typically, the calculated difference will be embodied as a cloud of datapoints not being equally spaced along the measuring range of the second sensor 5, so a resampling may be necessary to perform/calculate filtering algorithms (e.g. a Fourier transform or a digital FIR/IIR filter).

Possible filtering techniques that can be applied to the calculated position difference are e.g.:
- Resampling + Fourier transform + frequency selection of the DC component and integer frequencies + inverse Fourier transform. The angular position sensed by the second sensor 5 hereby replaces the "time" variable in a conventional time sampled signal to be transformed into the frequency range.
- Resampling + causal or non-causal FIR/IIR filter. The angular position sensed by the second sensor 5 hereby replaces the "time" variable in a conventional time sampled signal to be transformed into the frequency range.
- Moving average or clustered average at specified intervals. This technique is the easiest to implement since it does not require complex frequency analysis.
- Regression analysis of mathematical functions (sinusoidal, polynomial...) using least squares (or other norm function). This method may be adequate if the shape error function is known beforehand.

## Claims

1. Method of operating an electrical drive system (100), the electrical drive system (100) comprising:
- a, in particular mechanical, gear (1) having an input shaft (2) and having an output shaft (3), wherein the gear (1) has a known gear ratio between the input shaft (2) and the output shaft (3),
- a first sensor (4) being coupled to the input shaft (2) of the gear (1) and generating a first sensor signal (S1), the first sensor signal (S1) depending on a rotational angle of the input shaft (2), and
- a second sensor (5) being coupled to the output shaft (3) of the gear (1) and generating a second sensor signal (S2), the second sensor signal (S2) depending on a rotational angle of the output shaft (3),
the method comprising the steps:
- rotating the input shaft (2) and recording a resulting angle *α_{P}*(*t*) of the first sensor signal (S1) and a resulting angle *α_{S}*(*t*) of the second sensor signal (S2),
- mapping the angle *α_{P}*(*t*) of the first sensor signal (S1) to the angle *α_{S}*(*t*) of the second sensor signal (S2) by applying a gear ratio "i" of the mechanical gear (1) using the formula $α {′}_{P} \left(t\right) = \frac{{α}_{P} \left(t\right)}{i} mod 360 °$, and
- calculating a position difference e(t) between the first sensor signal (S1) and the second sensor signal (S2) using the formula e(t) *= α'_{P}*(*t*) *- α_{S}*(*t*),
**characterized by** the steps:
- evaluating the position difference e(t) versus the angle *α_{S}* of the second sensor signal (S2) in form of a cloud of datapoints (100) and applying a filtering technique to the position difference e(t) versus the angle *α_{S}* of the second sensor signal (S2) to calculate an error component e(*α_{S}*), and
- correcting the angle *α_{S}* of the second sensor signal (S2) based on the error component e(*α_{S}*).

2. Method according to claim 1, **characterized in that**
- the step of applying a filtering technique to the position difference e(t) versus the angle *α_{S}* of the second sensor signal (S2) comprises the step:
- transforming the position difference e(t) versus the angle *α_{S}* of the second sensor signal (S2) into the frequency domain, and
- the step of correcting the angle *α_{S}* of the second sensor signal (S2) based on the error component e(*α_{S}*) comprises the step:
- correcting the angle *α_{S}* of the second sensor signal (S2) based on the error component e(*α_{S}*) transformed into the frequency domain.

## Patentansprüche

1. Verfahren zum Betreiben eines elektrischen Antriebssystems (100), wobei das elektrische Antriebssystem (100) Folgendes umfasst:
- ein, insbesondere mechanisches, Getriebe (1) mit einer Eingangswelle (2) und mit einer Ausgangswelle (3), wobei das Getriebe (1) ein bekanntes Übersetzungsverhältnis zwischen der Eingangswelle (2) und der Ausgangswelle (3) aufweist,
- einen ersten Sensor (4), der mit der Eingangswelle (2) des Getriebes (1) gekoppelt ist und ein erstes Sensorsignal (S1) erzeugt, wobei das erste Sensorsignal (S1) von einem Drehwinkel der Eingangswelle (2) abhängt, und
- einen zweiten Sensor (5), der mit der Ausgangswelle (3) des Getriebes (1) gekoppelt ist und ein zweites Sensorsignal (S2) erzeugt, wobei das zweite Sensorsignal (S2) von einem Drehwinkel der Ausgangswelle (3) abhängt, wobei das Verfahren die folgenden Schritte umfasst:
- Drehen der Eingangswelle (2) und Aufzeichnen eines resultierenden Winkels α_{P}(t) des ersten Sensorsignals (S1) und eines resultierenden Winkels α_{S}(t) des zweiten Sensorsignals (S2),
- Abbilden des Winkels α_{P}(t) des ersten Sensorsignals (S1) auf den Winkel α_{S}(t) des zweiten Sensorsignals (S2) durch Anwenden einer Getriebeübersetzung "i" des mechanischen Getriebes (1) unter Verwendung der Formel $α {′}_{P} \left(t\right) = \frac{{α}_{P} \left(t\right)}{i} mod 360 °$, und
- Berechnen einer Positionsdifferenz e(t) zwischen dem ersten Sensorsignal (S1) und dem zweiten Sensorsignal (S2) unter Verwendung der Formel e(t) = α'_{P}(t) - α_{S}(t), **gekennzeichnet durch** die folgenden Schritte:
- Auswerten der Positionsdifferenz e(t) gegenüber dem Winkel α_{S} des zweiten Sensorsignals (S2) in Form einer Wolke von Datenpunkten (100) und Anwenden einer Filtertechnik auf die Positionsdifferenz e(t) gegenüber dem Winkel α_{S} des zweiten Sensorsignals (S2), um eine Fehlerkomponente e(α_{S}) zu berechnen, und
- Korrigieren des Winkels α_{S} des zweiten Sensorsignals (S2) basierend auf der Fehlerkomponente e(α_{S}).

2. Verfahren nach Anspruch 1, **dadurch gekennzeichnet, dass**
- der Schritt des Anwendens einer Filtertechnik auf die Positionsdifferenz e(t) gegenüber dem Winkel α_{S} des zweiten Sensorsignals (S2) den folgenden Schritt umfasst:
- Transformieren der Positionsdifferenz e(t) gegenüber dem Winkel α_{S} des zweiten Sensorsignals (S2) in die Frequenzdomäne, und
- der Schritt des Korrigierens des Winkels α_{S} des zweiten Sensorsignals (S2) basierend auf der Fehlerkomponente e(α_{S}) den folgenden Schritt umfasst:
- Korrigieren des Winkels α_{S} des zweiten Sensorsignals (S2) basierend auf der in die Frequenzdomäne transformierten Fehlerkomponente e(α_{S}).

## Revendications

1. Procédé de fonctionnement d'un système d'entraînement électrique (100), le système d'entraînement électrique (100) comprenant :
- un engrenage (1), notamment mécanique, ayant un arbre d'entrée (2) et ayant un arbre de sortie (3), l'engrenage (1) présentant un rapport d'engrenage connu entre l'arbre d'entrée (2) et l'arbre de sortie (3),
- un premier capteur (4) étant couplé à l'arbre d'entrée (2) de l'engrenage (1) et générant un premier signal de capteur (S1), le premier signal de capteur (S1) étant dépendant d'un angle de rotation de l'arbre d'entrée (2), et
- un second capteur (5) étant couplé à l'arbre de sortie (3) de l'engrenage (1) et générant un second signal de capteur (S2), le second signal de capteur (S2) étant dépendant d'un angle de rotation de l'arbre de sortie (3),
le procédé comprenant les étapes suivantes :
- la rotation de l'arbre d'entrée (2) et l'enregistrement d'un angle α_{P}(t) résultant du premier signal de capteur (S1) et d'un angle α_{S}(t) résultant du second signal de capteur (S2),
- le mappage de l'angle α_{P}(t) du premier signal de capteur (S1) sur l'angle α_{S}(t) du second signal de capteur (S2) en appliquant un rapport d'engrenage "i" de l'engrenage mécanique (1) au moyen de la formule $α {′}_{P} \left(t\right) = \frac{{α}_{P} \left(t\right)}{i} mod 360 °$ , et
- le calcul d'un écart de position e(t) entre le premier signal de capteur (S1) et le second signal de capteur (S2) au moyen de la formule e(t) = α'_{P}(t) - α_{S}(t), **caractérisé par** les étapes suivantes :
- l'évaluation de l'écart de position e(t) en fonction de l'angle α_{S} du second signal de capteur (S2) sous la forme d'un nuage de points de données (100) et l'application d'une technique de filtrage à l'écart de position e(t) en fonction de l'angle α_{S} du second signal de capteur (S2) pour calculer une composante d'erreur e(α_{S}), et
- la correction de l'angle α_{S} du second signal de capteur (S2) sur la base de la composante d'erreur e(α_{S}).

2. Procédé selon la revendication 1, **caractérisé en ce que**
- l'étape d'application d'une technique de filtrage à l'écart de position e(t) en fonction de l'angle α_{S} du second signal de capteur (S2) comprend l'étape suivante :
- la transformation de l'écart de position e(t) en fonction de l'angle α_{S} du second signal de capteur (S2) dans le domaine fréquentiel, et
- l'étape de correction de l'angle α_{S} du second signal de capteur (S2) sur la base de la composante d'erreur e(α_{S}) comprend l'étape suivante :
- la correction de l'angle α_{S} du second signal de capteur (S2) sur la base de la composante d'erreur e(α_{S}) transformée dans le domaine fréquentiel.
